(19) Europäisches Patentamt
European Patent Office
Office européen des brevets

(11) **EP 3 835 155 B1**

(12) **EUROPEAN PATENT SPECIFICATION**

(45) Date of publication and mention
of the grant of the patent:
**28.06.2023 Bulletin 2023/26**

(21) Application number: **20167934.7**

(22) Date of filing: **03.04.2020**

(51) International Patent Classification (IPC):
**B60W 10/06** (2006.01)    **B60W 10/08** (2006.01)
**B60W 10/26** (2006.01)    **B60W 20/11** (2016.01)
**B60W 50/00** (2006.01)

(52) Cooperative Patent Classification (CPC):
**B60W 10/06; B60W 10/08; B60W 10/26;**
**B60W 20/11;** B60W 2050/0013; B60W 2050/0026;
B60W 2050/0031; B60W 2050/0041;
B60W 2510/0623; B60W 2510/244; B60W 2520/10;
B60W 2540/10; Y02T 10/40; Y02T 10/62;
Y02T 10/70

(54) **HYBRID VEHICLE AND METHOD OF CONTROLLING THE SAME**

HYBRIDFAHRZEUG UND VERFAHREN ZU SEINER STEUERUNG

VÉHICULE HYBRIDE ET SON PROCÉDÉ DE COMMANDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.12.2019 KR 20190166232**

(43) Date of publication of application:
**16.06.2021 Bulletin 2021/24**

(73) Proprietors:
• **HYUNDAI MOTOR COMPANY**
**Seoul 06797 (KR)**
• **Kia Corporation**
**Seocho-gu**
**Seoul 06797 (KR)**

(72) Inventor: **LEE, Heeyun**
**18280 Hwaseong-si, Gyeonggi-do (KR)**

(74) Representative: **Viering, Jentschura & Partner**
**mbB**
**Patent- und Rechtsanwälte**
**Am Brauhaus 8**
**01099 Dresden (DE)**

(56) References cited:
**CN-A- 110 254 418**

• LIU TENG ET AL: "A Heuristic Planning
Reinforcement Learning-Based Energy
Management for Power-Split Plug-in Hybrid
Electric Vehicles", IEEE TRANSACTIONS ON
INDUSTRIAL INFORMATICS, IEEE SERVICE
CENTER, NEW YORK, NY, US, vol. 15, no. 12, 1
December 2019 (2019-12-01), pages 6436-6445,
XP011753866, ISSN: 1551-3203, DOI:
10.1109/TII.2019.2903098 [retrieved on
2019-12-04]
• WANY FENG ET AL: "Steady-State Optimization
of Internal Combustion Engine for Hybrid Electric
Vehicles", VEHICULAR ELECTRONICS AND
SAFETY, 2006. ICVES 2006. IEEE
INTERNATIONAL CONFERENCE ON, IEEE, PI, 1
December 2006 (2006-12-01), pages 428-433,
XP031177303, ISBN: 978-1-4244-0758-3
• TAN HUACHUN ET AL: "Energy management of
hybrid electric bus based on deep reinforcement
learning in continuous state and action space",
ENERGY CONVERSION AND MANAGEMENT,
ELSEVIER SCIENCE PUBLISHERS, OXFORD,
GB, vol. 195, 18 May 2019 (2019-05-18), pages
548-560, XP085752602, ISSN: 0196-8904, DOI:
10.1016/J.ENCONMAN.2019.05.038 [retrieved on
2019-05-18]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The invention relates to a vehicle, and more particularly, to a hybrid vehicle equipped with an engine and a motor.

BACKGROUND

A hybrid vehicle uses two or more different types of power sources. For example, a vehicle equipped with an engine using fossil fuels and a motor using electric energy is a representative hybrid vehicle. In the hybrid vehicle, a power distribution control technology that appropriately distributes the power of the engine and the motor required for driving the hybrid vehicle according to a driving situation of the hybrid vehicle is very important for improving fuel efficiency.

The power distribution control technology of mass-production hybrid vehicles mainly uses a rule-based control strategy. The rule-based control strategy uses the power source in a high efficiency range and maximizes energy recovery due to regenerative braking by controlling the engine on/off and determining an operation time of each of the engine and the motor according to a certain rule, and improves fuel economy of the vehicle by controlling a state of charge of a battery according to the driving situation of the vehicle.

In addition to the rule-based control strategy commonly used in the mass-production hybrid vehicles, an optimization-based control strategy based on an optimization theory has been widely studied. Optimization-based control strategies, such as Dynamic Programming Principle and Equivalent Consumption Minimization Strategy, are used directly and indirectly to establish and formulate rules for the rule-based control strategy of the mass-production hybrid vehicles.

However, since the existing rule-based control strategies are constructed based on heuristics, a decision-making method that improvises/intuitively determines/selects only limited information, rather than a rigorous analysis of a particular issue or situation, further optimization is needed depending on a structure and driving environment of a powertrain of the hybrid vehicle. In addition, the existing optimization-based control strategy has a disadvantage in that it is difficult to use for real-time control due to a large computational load. In addition, the existing rule-based control and optimization-based control strategies have limitations in operating variable control logic to reflect the aging and environmental changes of hybrid vehicles.

CN 110 254 418 A discloses a a hybrid electric vehicle reinforcement learning energy management control method.

LIU TENG ET AL: "A Heuristic Planning Reinforcement Learning-Based Energy Management for Power-Split Plug-in Hybrid Electric Vehicles", IEEE TRANSACTIONS ON INDUSTRIAL INFORMATICS, IEEE SERVICE CENTER, NEW YORK, NY, US, vol. 15, no. 12, 1 December 2019, pages 6436-6445, XP011753866 discloses a heuristic planning energy management controller, based on a Dyna agent of a reinforcement learning (RL) approach, for real-time fuel saving optimization of a plug-in hybrid electric vehicle (PHEV).

WANY FENG ET AL: "Steady-State Optimization of Internal Combustion Engine for Hybrid Electric Vehicles", VEHICULAR ELECTRONICS AND SAFETY, 2006. ICVES 2006. IEEE INTERNATIONAL CONFERENCE ON, IEEE, PI, 1 December 2006, pages 428-433, XP031177303 discloses a steady-state optimization of the ICE in a hybrid electric vehicle considering the efficiency of the overall powertrain.

TAN HUACHUN ET AL: "Energy management of hybrid electric bus based on deep reinforcement learning in continuous state and action space", ENERGY CONVERSION AND MANAGEMENT, ELSEVIER SCIENCE PUBLISHERS, OXFORD, GB, vol. 195, 18 May 2019, pages 548-560, XP085752602 discloses an energy management strategy with a deep reinforcement learning framework Actor-Critic.

SUMMARY

Therefore, an aspect of the invention is to generate optimal vehicle control values through learning using Q-learning technique of reinforcement learning in the field of machine learning based on vehicle state information.

Additional aspects of the invention will be set forth in part in the description which follows and, in part, will be obvious from the description, or may be learned by practice of the invention.

The invention provides a method of controlling a hybrid vehicle according to claim 1 and a hybrid vehicle according to claim 4. Further embodiments are described in the dependent claims.

BRIEF DESCRIPTION OF THE DRAWINGS

These and/or other aspects of the invention will become apparent and more readily appreciated from the following description of the embodiments, taken in conjunction with the accompanying drawings of which:

FIG. 1 is a view illustrating a control system of a hybrid vehicle according to exemplary embodiments of the invention.

FIG. 2 is a view illustrating a concept for generating an optimal power distribution control value of a hybrid vehicle according to exemplary embodiments of the invention.

FIG. 3A is a view illustrating a four-dimensional lookup table of an SOC information table stored in a vehicle model information map of a controller according to exemplary embodiments of the invention.

FIG. 3B is a view illustrating a four-dimensional lookup table of an engine fuel consumption information table stored in a vehicle model information map of a controller according to exemplary embodiments of the invention.

FIG. 4A and FIG. 4B are views illustrating a control method for generating an optimal power distribution control value of a hybrid vehicle according to exemplary embodiments of the invention.

## DETAILED DESCRIPTION

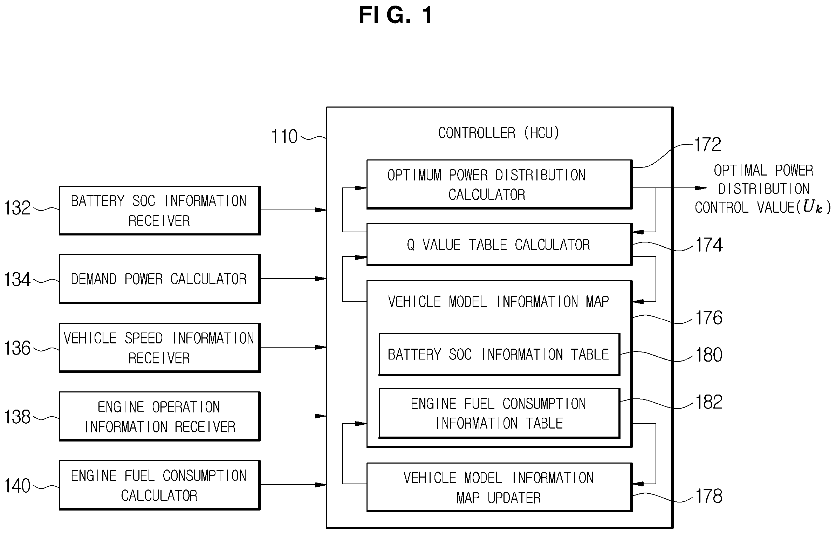

FIG. 1 is a view illustrating a control system of a hybrid vehicle according to exemplary embodiments of the invention. In FIG. 1, a controller (HCU; Hybrid Control Unit) 110 uses Q-learning technique of reinforcement learning in the field of machine learning based on vehicle state information to generate an optimal vehicle control value through learning.

As illustrated in FIG. 1, the controller 110 may receive state information of a hybrid vehicle from a battery SOC information receiver 132, a demand power calculator 134, a vehicle speed information receiver 136, an engine operation information receiver 138, and an engine fuel consumption calculator 140. The battery SOC information receiver 132, the requested power calculator 134, the vehicle speed information receiver 136, the engine operation information receiver 138, and the engine fuel consumption calculator 140 may be vehicle state information obtaining devices.

The battery SOC information receiver 132 may receive state of charger (SOC) information of a battery from a battery management system (BMS) that manages the battery, and may transmit the received SOC information to the controller 110.

The demand power calculator 134 may calculate a demand power of the hybrid vehicle based on information such as a detection signal of an accelerator pedal sensor (APS) of the hybrid vehicle and a vehicle speed, and may transmit the calculated requested power information to the controller 110. The demand power calculator 134 may calculate the demand power of the hybrid vehicle through driving state information and a vehicle parameter of the hybrid vehicle, as illustrated in Equation 1 below.

<Equation 1>

$$P_{dem} = v \cdot (F_{loss} + F_{accel}), \; F_{accel} = (M_{veh} + I_{eq}) \cdot a_{veh} \; , \; F_{loss} = f_0 + f_1 \times v + f_2 \times v^2$$

$P_{dem}$ : vehicle demand power

$v$ : vehicle speed

$F_{loss}$ : vehicle drive loss force

$F_{accel}$: vehicle acceleration force

$M_{veh}$: vehicle weight

$I_{eq}$: vehicle powertrain equivalent inertia

$a_{veh}$: vehicle acceleration

$f_0, f_1, f_2$: vehicle driving resistance coefficient

The vehicle speed information receiver 136 may receive information about a current speed of the hybrid vehicle and transmit the received speed information to the controller 110.

The engine operation information receiver 138 may receive real-time on/off state information of an engine and transmit the received on/off state information of the engine to the controller 110.

The engine fuel consumption calculator 140 may calculate the fuel consumption per hour of the engine when the engine is on, and may transmit the calculated fuel consumption information to the controller 110.

The controller 110 may include an optimum power distribution calculator 172, a Q value table calculator 174, a vehicle model information map 176, and a vehicle model information map updater 178. The vehicle model information map 176 may include a battery SOC information table 180 and an engine fuel consumption information table 182. The controller 110 may generate an optimal power distribution control value $u_k$ through learning using the Q-learning technique based on such device configuration (or logic). The generated optimal power distribution control value $u_k$ may be transmitted to a lower control system that controls the engine and a motor.

The optimum power distribution calculator 172 may calculate the optimal power distribution control value (control ratio) $u_k$ based on the engine and the motor on the basis of hybrid vehicle state information (battery SOC information, demand power, vehicle speed, engine on/off state information). Compute (derive) the optimal power distribution control value (control ratio) $u_k$ using a Q value table of the Q value table calculator 174.

The Q value table calculator 174 may update the values of the Q value table according to a predetermined algorithm. The Q value table may be updated by reflecting changes in the vehicle state information in two consecutive periods.

The vehicle model information map 176 may include the battery SOC information table 180 and the engine fuel consumption information table 182. The battery SOC information table 180 of the vehicle model information map 176 may store the battery SOC information and relationship data of a battery SOC output according to the demand power, the vehicle speed, and a control input. The engine fuel consumption information table 182 of the vehicle model information map 176 may store relationship data of engine power consumption determined by the demand power, the vehicle speed, the control input, and engine on/off information.

The vehicle model information map updater 178 may update data of the vehicle model information map 176 using driving information and the vehicle state information (battery SOC information, demand power, vehicle speed, engine on/off state information, and engine fuel consumption) of the hybrid vehicle. The vehicle model information map updater 178 may be updated by reflecting the changed driving information and the changed vehicle state information in two consecutive periods.

The controller 110 may discretize the measured and calculated values using the Nearest Neighbor method as illustrated in Equation 2, Equation 3, and Equation 4 to use the demand power, the vehicle speed, and the battery SOC, respectively.

$$<\text{Equation 2}> \quad P_{dem} \in \left\{ P_{dem}^1, P_{dem}^2, \dots, P_{dem}^{N_p} \right\}$$

$$<\text{Equation 3}> \quad v \in \left\{ v^1, v^2, \dots, v^{N_v} \right\}$$

$$<\text{Equation 4}> \quad SOC \in \left\{ soc^1, soc^2, \dots, soc^{N_{soc}} \right\}$$

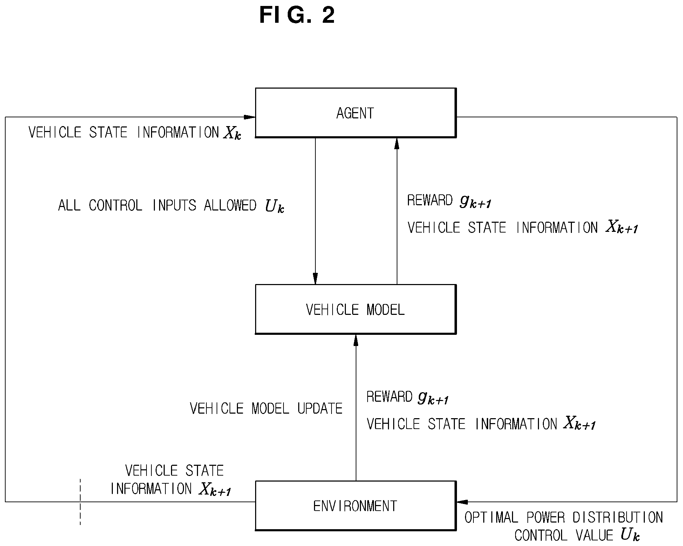

FIG. 2 is a view illustrating a concept for generating an optimal power distribution control value of a hybrid vehicle according to exemplary embodiments of the invention. That is, FIG. 2 illustrates a concept of generating the optimal vehicle control value through learning using the Q-learning technique of reinforcement learning in the field of machine learning based on the state information of the hybrid vehicle.

As illustrated in FIG. 2, the invention is characterized by optimizing the power distribution ratio of the engine and the motor through learning by applying an algorithm developed based on the Q-learning technique of reinforcement learning in the field of machine learning to power distribution of the hybrid vehicle.

To this end, a system configuration according to the embodiment of the invention may be largely composed of an agent, a vehicle model, and an environment. The agent is a subject that performs decision-making and learning, and may be the controller (HCU) 110 that is a higher control entity illustrated in FIG. 1 in the hybrid vehicle of the invention. The environment may be any component except the agent. For example, in the hybrid vehicle according to the embodiment, the environment may include the battery SOC information receiver 132, the demand power calculator 134, the vehicle speed information receiver 136, the engine operation information receiver 138, and engine fuel consumption calculator 140 illustrated in FIG. 1. In addition, although not illustrated in the drawing, the environment may include a lower control entity that receives control signals from the controller 110 and performs control of the hybrid vehicle, and the engine and the motor controlled by the lower control entity.

The agent may derive the optimal power distribution control value (control ratio) using the Q value table from the current driving state information and state variables of the hybrid vehicle. The Q value table may be a table approximating the value for each control input according to a vehicle driving situation. The agent may derive the optimal power distribution control value (control ratio) using the Q value table according to the driving state of the hybrid vehicle to optimize the power distribution control value (control ratio). In addition, the agent may derive target torque values of the engine and the motor by using the power distribution control value and demand power information.

The vehicle model may be a state information model of the hybrid vehicle, and is a table approximating the fuel consumption of the engine and a battery usage of the motor according to the selected optimal control value. The vehicle model may be updated using driving environment of the hybrid vehicle and measured values, thereby modeling an actual powertrain state of the hybrid vehicle.

In general Q-learning, the Q value table may be updated through the interaction between the agent and the environment. However, in the hybrid vehicle, the vehicle model (state information model) is used to improve the learning performance and real-time control performance of the controller 110.

The Q value table may be updated to reflect the trend of a driving speed profile of the hybrid vehicle through the interaction between the agent and the vehicle model. The agent may update the Q value table with a result obtained by inputting state variable information indicating the actual driving situation of the hybrid vehicle and virtual control input information to the vehicle model through the next state variable (+1) and reward (+1) of the hybrid vehicle.

In the hybrid vehicle, by repeating this process, the Q value table may be updated to derive the control input (power distribution ratio) optimized for the driving environment and powertrain state of the hybrid vehicle. The update period of the Q value table may be performed in real time or every preset period.

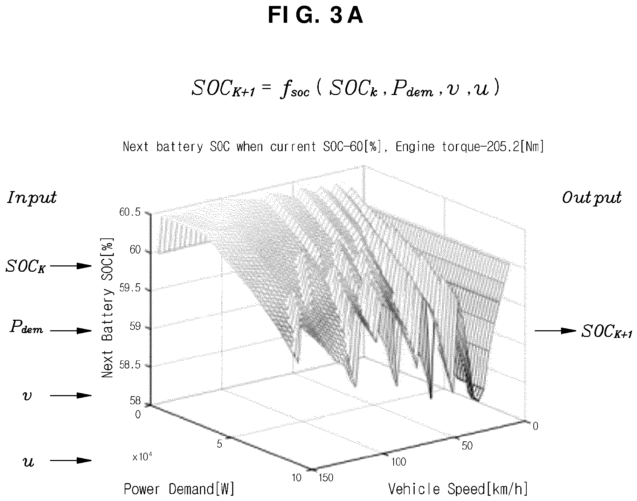

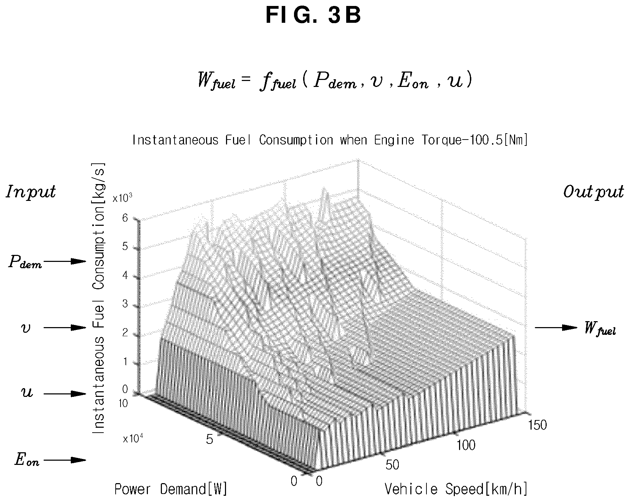

FIG. 3 illustrates a four-dimensional lookup table of each of the SOC information table 180 and the engine fuel consumption information table 182 stored in the vehicle model information map 176 of the controller (HCU) 110 according to exemplary embodiments of the invention. FIG. 3A is the SOC information table 180 and FIG. 3B is the engine fuel consumption information table 182.

As illustrated in FIG. 3A, the four-dimensional lookup table of the SOC information table 180 may be represented by Equation 5 below, and the four-dimensional lookup table of the engine fuel consumption information table 182 may be represented by Equation 6 below.

$$SOC_{k+1} = f_{soc}(SOC_k, P_{dem}, v, u)$$

<Equation 5>

$f_{soc}$: approximate model of battery SOC
$u$: power distribution control input (from previous cycle)

$$W_{fuel} = f_{fuel}(P_{dem}, v, E_{on}, u)$$

<Equation 6>

$f_{fuel}$: approximation model of engine fuel consumption
$E_{on}$: engine on / off state information

The optimization of the power distribution control value made in the controller 110 is made to minimize an overall cost function consisting of fuel consumption, battery charge/discharge, and engine on/off frequency limits, as illustrated in Equation 7 below.

$$minimize \quad J_\pi(x_0) = \lim_{N \to \infty} E\left\{\sum_{k=0}^{N-1} \gamma^k g(x_k, \pi(x_k))\right\}$$

$$g = W_{fuel} + \beta \cdot \Delta E_{on} + \zeta(SOC),$$

$$\zeta(SOC) = \begin{cases} \xi \cdot (SOC - SOC_{ref})^2 & if\ SOC > SOC_{min} \\ C_{Penalty} & if\ SOC \le SOC_{min} \end{cases}$$

<Equation 7>

$J_\pi(x_0)$: total cost value (total cost value starting from initial value x0 and following control rule pi)

$E$: expected value

$\gamma$: discounted rate

$g$: instantaneous cost value

$x_k$: state variables

$\pi(x_k)$: control rules based on the state variable Xk

$\beta$: engine on / off penalty constant

$\Delta E_{on}$: engine on / off state information

$\zeta(SOC)$: SOC value calculation function

$SOC_{ref}$: target SOC reference constant value

$C_{Penalty}$ : penalty value when SOC is smaller than SOC minimum

$\xi$ : weight constant value according to SOC regulation

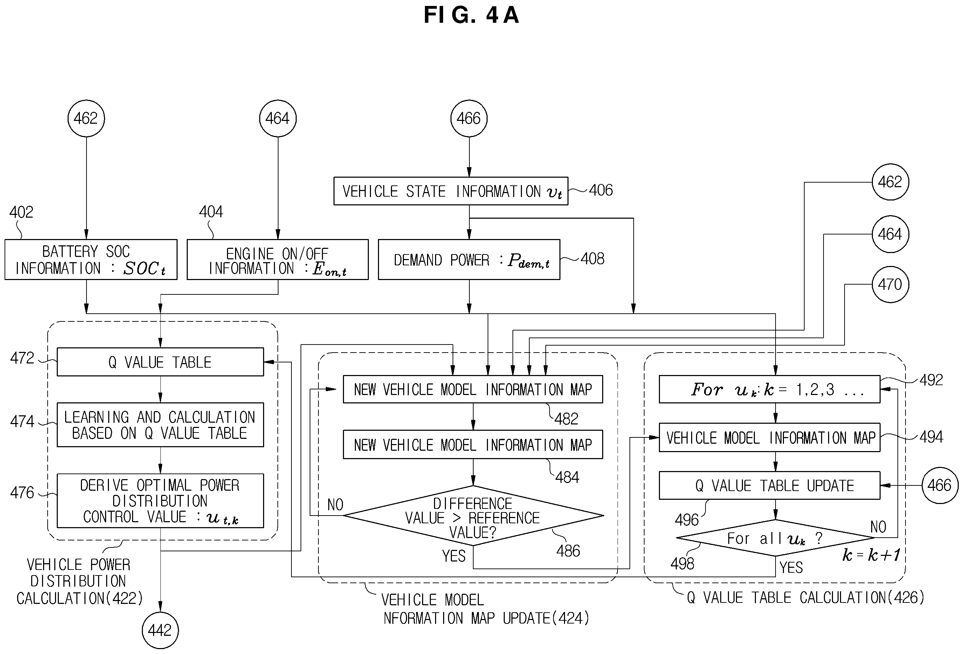

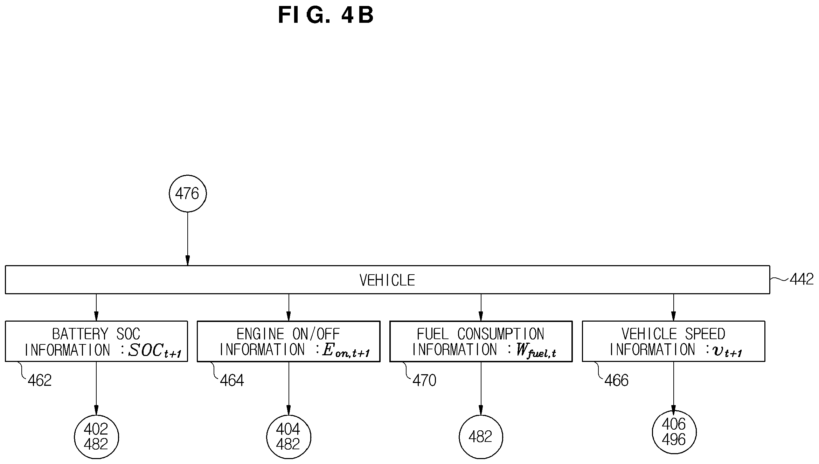

FIG. 4A and FIG. 4B are views illustrating a control method for generating an optimal power distribution control value of a hybrid vehicle according to exemplary embodiments of the invention. In a control method illustrated in FIG. 4A and FIG. 4B, the concept of generating the optimal vehicle control value through learning using the Q-learning technique of reinforcement learning illustrated in FIGS. 2 and 3 based on the device configuration illustrated in FIG. 1 was applied.

In FIG. 4A and FIG. 4B, reference numerals 402, 404, 406, and 408 denote battery SOC information SOCt, engine on/off information $E_{on,t}$, demand power $P_{dem,t}$, and vehicle speed information vt, respectively. The battery SOC information SOCt, the engine on/off information $E_{on,t}$, the demand power $P_{dem,t}$, the vehicle speed information vt are parameter values in the current period (time) t at which the battery SOC information receiver 132, the engine operation information receiver 138, the demand power calculator 134, the vehicle speed information receiver 136, which have been described with reference to FIG. 1, have been received or calculated, respectively.

The battery SOC information SOCt, the engine on/off information $E_{on,t}$, the demand power $P_{dem,t}$, the vehicle speed information vt may be used for vehicle power distribution calculation 422, vehicle model information map update 424, and Q value table calculation 426. The vehicle power distribution calculation 422, the vehicle model information map update 424, and the Q value table calculation 426 of FIG. 4A are respectively performed by the optimum power distribution calculator 172, the Q value table calculator 174, and the vehicle model information map updater 178 of the controller 110 described with reference to FIG. 1.

In the vehicle power distribution calculation 422, the optimum power distribution calculator 172 may calculate the optimal power distribution control value (control ratio) $u_k$ of the engine and motor based on hybrid vehicle state information (battery SOC information SOCt, engine on/off information $E_{on,t}$, demand power $P_{dem,t}$, vehicle speed information vt) by using a Q value table 472 secured through the Q value table calculation 426 of the Q value table calculator 174 (476).

In vehicle model information map update 424, a new vehicle mode map 482 may be obtained using the vehicle state information (battery SOC information, demand power, vehicle speed, engine on/off state information, engine fuel consumption) in two successive periods (e.g., t and t + 1), and the vehicle model information map may be updated (484). When the difference value of the vehicle model information in two consecutive periods is greater than a preset reference value (YES in 486), the controller 110 may provide new vehicle model information to the vehicle model information map 484 of the Q value table calculation 426.

In Q value table calculation 426, the Q value table may be updated based on all control inputs ($u_k$, k = 1, 2, 3, ...) and the vehicle model information map (492, 494, and 496). When the update of the Q value table for all control inputs ($u_k$, k = 1, 2, 3, ...) is complete (YES in 498), the controller 110 may provide the updated Q value table in an operation of the vehicle power distribution calculation 422.

The optimal power distribution control value $u_{t,k}$ derived through the vehicle power distribution calculation 422, the vehicle model information map update 424, and the Q value table calculation 426 may be transmitted to the lower control system for controlling the engine and the motor of the hybrid vehicle (442). The lower control system may perform appropriate power distribution control of the engine and the motor based on the received optimum power distribution control value $u_{t,k}$ received.

In FIG. 4A and FIG. 4B, reference numerals 462, 464, 470, and 466 denote battery SOC information $SOC_{t+1}$, engine on/off information $E_{on,t+1}$, fuel consumption information $W_{dem,t+1}$, and vehicle speed information vt+i at a next period (time) t+1, respectively. The battery SOC information $SOC_{t+1}$, the engine on/off information $E_{on,t+1}$, the fuel consumption information Wdem,t+1, and the vehicle speed information vt+i are parameter values in the next period (time) t+1 at which the battery SOC information receiver 132, the engine operation information receiver 138, the engine fuel consumption calculator 140, the vehicle speed information receiver 136, which have been described with reference to FIG. 1, have been received or calculated, respectively.

The battery SOC information $SOC_{t+1}$, the engine on/off information $E_{on,t+1}$, the fuel consumption information Wdem,t+1, and the vehicle speed information vt+i in the next period (time) t+1 may be used to derive the optimal power distribution control value $u_{t+1,k}$ in the next period (time) t+1.

According to the exemplary embodiments of the invention, it provides the effect of generating optimal vehicle control values through learning using Q-learning technique of reinforcement learning in the field of machine learning based on vehicle status information.

**Claims**

1. A method of controlling a hybrid vehicle using Q-learning technique comprising:

   obtaining vehicle state information including battery SOC information, engine on/off information, demand power, vehicle speed information, and fuel consumption information;
   creating a vehicle model information map using the vehicle state information;
   creating a Q value table based on the vehicle model information map; and
   calculating power distribution control values of an engine and a motor through reinforcement learning based on the Q value table,
   **characterized in that**
   the reinforcement learning based on the Q value table is configured to calculate the power distribution control values using the vehicle state information generated in two consecutive periods as state and reward values, respectively.

2. The method according to claim 1, further comprising:

   updating the vehicle model information map to reflect change contents in the vehicle state information;
   updating the Q value table to reflect update contents of the vehicle model information map; and
   performing calculation of the power distribution control values reflecting the changed contents of the vehicle state information by performing the reinforcement learning based on the updated Q value table.

3. The method according to claim 1 or 2, wherein the power distribution control values are values for minimizing energy consumption of the engine and the motor while satisfying the demand power.

4. A hybrid vehicle comprising:

   a vehicle state information obtaining device (132, 134, 136, 138, 140) configured to obtain vehicle state information including battery SOC information, engine on/off information, demand power, vehicle speed information, and fuel consumption information; and
   a controller (110) using Q-learning technique configured to:

      create a vehicle model information map using the vehicle state information;
      create a Q value table based on the vehicle model information map; and
      calculate power distribution control values of an engine and a motor through reinforcement learning based on the Q value table,
      **characterized in that**
      the reinforcement learning based on the Q value table is configured to calculate the power distribution control values using the vehicle state information generated in two consecutive periods as state and reward values, respectively.

5. The hybrid vehicle according to claim 4, wherein the controller is configured to:

   update the vehicle model information map to reflect change contents in the vehicle state information;
   update the Q value table to reflect update contents of the vehicle model information map; and
   perform calculation of the power distribution control values reflecting the changed contents of the vehicle state information by performing the reinforcement learning based on the updated Q value table.

6. The hybrid vehicle according to claim 4 or 5, wherein the power distribution control values are values for minimizing energy consumption of the engine and the motor while satisfying the demand power.

7. The hybrid vehicle according to any one of claims 4 to 6, wherein the controller comprises a power distribution calculator, a Q value table calculator, a vehicle model information map, and a vehicle model information map updater.

8. The hybrid vehicle according to claim 7, wherein the power distribution calculator is configured to calculate the power distribution control values of the engine and the motor based on the vehicle state information using the Q value table of the Q value table calculator.

9. The hybrid vehicle according to claim 7 or 8, wherein the Q value table calculator is configured to update values of the Q value table according to a predetermined algorithm.

10. The hybrid vehicle according to any one of claims 7 to 9, wherein the vehicle model information map comprises a battery SOC information table and an engine fuel consumption information table.

11. The hybrid vehicle according to claim 10, wherein the battery SOC information table is configured to store relationship data between the battery SOC information, the demand power, and a battery SOC output according to the vehicle speed.

12. The hybrid vehicle according to claim 10 or 11, wherein the engine fuel consumption information table is configured to store relationship data between an engine fuel consumption amount determined according to the demand power, the vehicle speed, and the engine on / off information.

13. The hybrid vehicle according to any one of claims 7 to 12, wherein the vehicle model information map updater is configured to update data of the vehicle model information map using the changed driving information of the hybrid vehicle and the changed vehicle state information.

**Patentansprüche**

1. Verfahren zum Steuern eines Hybridfahrzeugs unter Verwendung einer Q-Lernen-Technik, welches aufweist:

   Erlangen von Fahrzeugzustandsinformationen, welche Batterie-SOC-Informationen, Verbrennungsmotor-Ein/Aus-Informationen, eine Anforderungsleistung, Fahrzeuggeschwindigkeitsinformationen und Kraftstoffverbrauchsinformationen aufweisen;
   Erzeugen einer Fahrzeug-Modell-Informationen-Karte unter Verwendung der Fahrzeugzustandsinformationen;
   Erzeugen einer Q-Wert-Tabelle basierend auf der Fahrzeug-Modell-Informationen-Karte und
   Berechnen von Leistungsverteilung-Steuerung-Werten eines Verbrennungsmotors und eines Elektromotors durch verstärkendes Lernen basierend auf der Q-Wert-Tabelle,
   **dadurch gekennzeichnet, dass**
   das auf der Q-Wert-Tabelle basierende verstärkende Lernen eingerichtet ist, um die Leistungsverteilung-Steuerung-Werte unter Verwendung der in zwei aufeinanderfolgenden Zeiträumen erzeugten Fahrzeugzustandsinformationen in zugeordneter Weise als Zustand- und Belohnung-Werte zu berechnen.

2. Verfahren gemäß Anspruch 1, welches ferner aufweist:

   Aktualisieren der Fahrzeug-Modell-Informationen-Karte, um Änderungsinhalte in den Fahrzeugzustandsinformationen widerzuspiegeln;
   Aktualisieren der Q-Wert-Tabelle, um Aktualisierungsinhalte der Fahrzeug-Modell-Informationen widerzuspiegeln; und
   Durchführen einer Berechnung der Leistungsverteilung-Steuerung-Werte, welche die geänderten Inhalte der Fahrzeugzustandsinformationen widerspiegeln, durch Durchführen des verstärkenden Lernens basierend auf der aktualisierten Q-Wert-Tabelle.

3. Verfahren gemäß Anspruch 1 oder 2, wobei die Leistungsverteilung-Steuerung-Werte Werte zum Minimieren eines Energieverbrauchs des Verbrennungsmotors und des Elektromotors während des Erfüllens der Anforderungsleistung sind.

4. Hybridfahrzeug, welches aufweist:

   eine Fahrzeugzustandsinformationen-Erlangung-Vorrichtung (132, 134, 136, 138, 140), welche eingerichtet ist, um Fahrzeugzustandsinformationen, welche Batterie-SOC-Informationen, Verbrennungsmotor-Ein/Aus-Informationen, eine Anforderungsleistung, Fahrzeuggeschwindigkeitsinformationen und Kraftstoffverbrauchsinformationen aufweisen, zu erlangen; und
   eine Steuervorrichtung (110) unter Verwendung einer Q-Lernen-Technik, welche eingerichtet ist, um:

   eine Fahrzeugmodell-Informationen-Karte unter Verwendung der Fahrzeugzustandsinformationen zu erzeugen;
   eine Q-Wert-Tabelle basierend auf der Fahrzeug-Modell-Informationen-Karte zu erzeugen; und
   Leistungsverteilung-Steuerung-Werte eines Verbrennungsmotors und eines Elektromotors durch verstärkendes Lernen basierend auf der Q-Wert-Tabelle zu berechnen,
   **dadurch gekennzeichnet, dass**

   das verstärkende Lernen basierend auf der Q-Wert-Tabelle eingerichtet ist, um die Leistungsverteilung-Steuerung-Werte unter Verwendung der Fahrzeugzustandsinformationen, die in zwei aufeinanderfolgenden Zeiträumen erzeugt sind, in zugeordneter Weise als Zustand- und Belohnung-Werte zu berechnen.

5. Hybridfahrzeug gemäß Anspruch 4, wobei die Steuervorrichtung eingerichtet ist, um:

   die Fahrzeug-Modell-Informationen-Karte zu aktualisieren, um Änderungsinhalte in den Fahrzeugzustandsinformationen widerzuspiegeln;
   die Q-Wert-Tabelle zu aktualisieren, um Aktualisierungsinhalte der Fahrzeug-Modell-Informationen-Karte widerzuspiegeln; und
   eine Berechnung der Leistungsverteilung-Steuerung-Werte, welche die geänderten Inhalte der Fahrzeugzustandsinformationen widerspiegeln, durchzuführen durch Durchführen des verstärkenden Lernens basierend auf der aktualisierten Q-Wert-Tabelle.

6. Hybridfahrzeug gemäß Anspruch 4 oder 5, wobei die Leistungsverteilung-Steuerung-Werte Werte zum Minimieren eines Energieverbrauchs des Verbrennungsmotors und des Elektromotors während des Erfüllens der Anforderungsleistung sind.

7. Hybridfahrzeug gemäß irgendeinem der Ansprüche 4 bis 6, wobei die Steuervorrichtung einen Leistungsverteilung-Berechner, einen Q-Wert-Tabelle-Berechner, eine Fahrzeug-Modell-Informationen-Karte und einen Fahrzeug-Modell-Informationen-Karte-Aktualisierer aufweist.

8. Hybridfahrzeug gemäß Anspruch 7, wobei der Leistungsverteilung-Berechner eingerichtet ist, um die Leistungsverteilung-Steuerung-Werte des Verbrennungsmotors und des Elektromotors basierend auf den Fahrzeugzustandsinformationen unter Verwendung der Q-Wert-Tabelle des Q-Wert-Tabelle-Berechners zu berechnen.

9. Hybridfahrzeug gemäß Anspruch 7 oder 8, wobei der Q-Wert-Tabelle-Berechner eingerichtet ist, um Werte der Q-Wert-Tabelle gemäß einem vorbestimmten Algorithmus zu aktualisieren.

10. Hybridfahrzeug gemäß irgendeinem der Ansprüche 7 bis 9, wobei die Fahrzeug-Modell-Informationen-Tabelle eine Batterie-SOC-Informationen-Tabelle und eine Verbrennungsmotor-Kraftstoffverbrauch-Informationen-Tabelle aufweist.

11. Hybridfahrzeug gemäß Anspruch 10, wobei die Batterie-SOC-Informationen-Tabelle eingerichtet ist, um Beziehungsdaten zwischen den Batterie-SOC-Informationen, der Anforderungsleistung und einer Batterie-SOC-Ausgabe gemäß der Fahrzeuggeschwindigkeit zu speichern.

12. Hybridfahrzeug gemäß Anspruch 10 oder 11, wobei die Verbrennungsmotor-Kraftstoffverbrauch-Informationen-Tabelle eingerichtet ist, um Beziehungsdaten zwischen einer Verbrennungsmotor-Kraftstoffverbrauch-Menge, die gemäß der Anforderungsleistung ermittelt ist, der Fahrzeuggeschwindigkeit und den Motor-Ein/Aus-Informationen zu speichern.

13. Hybridfahrzeug gemäß irgendeinem der Ansprüche 7 bis 12, wobei der Fahrzeug-Modell-Informationen-Karte-Aktualisierer eingerichtet ist, um Daten der Fahrzeug-Modell-Informationen-Karte unter Verwendung der geänderten Fahrinformationen des Hybridfahrzeugs und der geänderten Fahrzeugzustandsinformationen zu aktualisieren.

**Revendications**

1. Procédé de commande d'un véhicule hybride en utilisant une technique de Q-learning, comprenant :

l'obtention d'informations d'état de véhicule comprenant des informations d'état de charge de batterie, des informations de mise en marche/arrêt de moteur à combustion, la demande de puissance, des informations de vitesse de véhicule et des informations de consommation de carburant ;
la création d'une mappe d'informations de modèle de véhicule en utilisant les informations d'état de véhicule ;
la création d'un tableau de valeurs Q sur la base de la mappe d'informations de modèle de véhicule ; et
le calcul de valeurs de commande de distribution de puissance d'un moteur à combustion et d'un moteur électrique par apprentissage par renforcement sur la base du tableau de valeurs Q,
**caractérisé en ce que**
l'apprentissage par renforcement basé sur le tableau de valeurs Q est configuré pour calculer les valeurs de commande de distribution de puissance en utilisant les informations d'état de véhicule générées au cours de deux périodes consécutives comme valeurs d'état et de récompense, respectivement.

2. Procédé selon la revendication 1, comprenant en outre :

la mise à jour de la mappe d'informations de modèle de véhicule afin de refléter des contenus modifiés dans les informations d'état de véhicule ;
la mise à jour du tableau de valeurs Q pour refléter des contenus de mise à jour de la mappe d'informations de modèle de véhicule ; et
l'exécution de calcul des valeurs de commande de distribution de puissance reflétant les contenus modifiés des informations d'état de véhicule en effectuant l'apprentissage par renforcement sur la base du tableau de valeurs Q mis à jour.

3. Procédé selon la revendication 1 ou 2, dans lequel les valeurs de commande de distribution de puissance sont des valeurs permettant de minimiser la consommation d'énergie du moteur à combustion et du moteur électrique tout en satisfaisant la demande de puissance.

4. Véhicule hybride, comprenant :

un dispositif d'obtention d'informations d'état de véhicule (132, 134, 136, 138, 140) configuré pour obtenir des informations d'état de véhicule comprenant des informations d'état de charge de batterie, des informations de mise en marche/arrêt de moteur à combustion, la demande de puissance, des informations de vitesse de véhicule et des informations de consommation de carburant ; et
un contrôleur (110) utilisant la technique de Q-learning configuré pour :

créer une mappe d'informations de modèle de véhicule en utilisant les informations d'état de véhicule ;
créer un tableau de valeurs Q sur la base de la mappe d'informations de modèle de véhicule ; et
calculer des valeurs de commande de distribution de puissance d'un moteur à combustion et d'un moteur électrique par apprentissage par renforcement sur la base du tableau de valeurs Q,

**caractérisé en ce que**
l'apprentissage par renforcement sur la base du tableau de valeurs Q est configuré pour calculer les valeurs de commande de distribution de puissance en utilisant les informations d'état de véhicule générées au cours de deux périodes consécutives comme valeurs d'état et de récompense, respectivement.

5. Véhicule hybride selon la revendication 4, dans lequel le contrôleur est configuré pour :

mettre à jour la mappe d'informations de modèle de véhicule pour refléter des contenus modifiés dans les informations d'état de véhicule ;

mettre à jour le tableau de valeurs Q pour refléter des contenus mis à jour de la mappe d'informations de modèle de véhicule ; et

exécuter le calcul des valeurs de commande de distribution de puissance reflétant les contenus modifiés des informations d'état de véhicule en effectuant l'apprentissage par renforcement sur la base du tableau de valeurs Q mis à jour.

6. Véhicule hybride selon la revendication 4 ou 5, dans lequel les valeurs de commande de distribution de puissance sont des valeurs permettant de minimiser la consommation d'énergie du moteur à combustion et du moteur électrique tout en satisfaisant la demande de puissance.

7. Véhicule hybride selon l'une quelconque des revendications 4 à 6, dans lequel le contrôleur comprend un calculateur de distribution de puissance, un calculateur de tableaux de valeurs Q, une mappe d'informations de modèle de véhicule et un dispositif de mise à jour de mappe d'informations de modèle de véhicule.

8. Véhicule hybride selon la revendication 7, dans lequel le calculateur de distribution de puissance est configuré pour calculer les valeurs de commande de distribution de puissance du moteur à combustion et du moteur électrique sur la base des informations d'état de véhicule en utilisant le tableau de valeurs Q du calculateur de tableaux de valeurs Q.

9. Véhicule hybride selon la revendication 7 ou 8, dans lequel le calculateur de tableaux de valeurs Q est configuré pour mettre à jour des valeurs du tableau de valeurs Q selon un algorithme prédéterminé.

10. Véhicule hybride selon l'une quelconque des revendications 7 à 9, dans lequel la mappe d'informations de modèle de véhicule comprend un tableau d'informations d'état de charge de batterie et un tableau d'informations de consommation de carburant de moteur à combustion.

11. Véhicule hybride selon la revendication 10, dans lequel le tableau d'informations d'état de charge de batterie est configuré pour stocker des données de relation entre les informations d'état de charge de batterie, la demande de puissance et une sortie d'état de charge de batterie en fonction de la vitesse de véhicule.

12. Véhicule hybride selon la revendication 10 ou 11, dans lequel le tableau d'informations de consommation de carburant de moteur à combustion est configuré pour stocker des données de relation entre une quantité de consommation de carburant de moteur à combustion déterminée en fonction de la demande de puissance, la vitesse de véhicule et des informations de mise en marche/arrêt de moteur à combustion.

13. Véhicule hybride selon l'une quelconque des revendications 7 à 12, dans lequel le dispositif de mise à jour de mappe d'informations de modèle de véhicule est configuré pour mettre à jour des données de la mappe d'informations de modèle de véhicule en utilisant les informations d'entraînement modifié du véhicule hybride et les informations d'état modifié de véhicule.

**FIG. 1**

CONTROLLER (HCU) 110

OPTIMUM POWER DISTRIBUTION CALCULATOR — 172 → OPTIMAL POWER DISTRIBUTION CONTROL VALUE ($U_k$)

Q VALUE TABLE CALCULATOR — 174

VEHICLE MODEL INFORMATION MAP — 176

BATTERY SOC INFORMATION TABLE — 180

ENGINE FUEL CONSUMPTION INFORMATION TABLE — 182

VEHICLE MODEL INFORMATION MAP UPDATER — 178

132 — BATTERY SOC INFORMATION RECEIVER

134 — DEMAND POWER CALCULATOR

136 — VEHICLE SPEED INFORMATION RECEIVER

138 — ENGINE OPERATION INFORMATION RECEIVER

140 — ENGINE FUEL CONSUMPTION CALCULATOR

EP 3 835 155 B1

# FIG. 2

AGENT

VEHICLE STATE INFORMATION $X_k$

ALL CONTROL INPUTS ALLOWED $U_k$

REWARD $g_{k+1}$

VEHICLE STATE INFORMATION $X_{k+1}$

VEHICLE MODEL

VEHICLE MODEL UPDATE

REWARD $g_{k+1}$

VEHICLE STATE INFORMATION $X_{k+1}$

VEHICLE STATE INFORMATION $X_{k+1}$

ENVIRONMENT

OPTIMAL POWER DISTRIBUTION CONTROL VALUE $U_k$

EP 3 835 155 B1

# FIG. 3A

$$SOC_{K+1} = f_{soc} \left( SOC_k , P_{dem} , v , u \right)$$

Next battery SOC when current SOC-60[%], Engine torque-205.2[Nm]

*Input*

$SOC_K \longrightarrow$

$P_{dem} \longrightarrow$

$v \longrightarrow$

$u \longrightarrow$

*Output*

$\longrightarrow SOC_{K+1}$

Power Demand[W]

Vehicle Speed[km/h]

# FIG. 3B

$$W_{fuel} = f_{fuel}\left(P_{dem}, v, E_{on}, u\right)$$

Instantaneous Fuel Consumption when Engine Torque-100.5[Nm]

*Input*

*Output*

$P_{dem}$ ⟶

$v$ ⟶

$u$ ⟶

$E_{on}$ ⟶

⟶ $W_{fuel}$

Instantaneous Fuel Consumption[kg/s]

Power Demand[W]

Vehicle Speed[km/h]

# FIG. 4 A

VEHICLE STATE INFORMATION $v_t$ ～406

BATTERY SOC INFORMATION : $SOC_t$

ENGINE ON/OFF INFORMATION : $E_{on,t}$

DEMAND POWER : $P_{dem,t}$ ～408

Q VALUE TABLE

LEARNING AND CALCULATION BASED ON Q VALUE TABLE

DERIVE OPTIMAL POWER DISTRIBUTION CONTROL VALUE : $u_{t,k}$

VEHICLE POWER DISTRIBUTION CALCULATION(422)

NEW VEHICLE MODEL INFORMATION MAP

NEW VEHICLE MODEL INFORMATION MAP

NO ◇ DIFFERENCE VALUE > REFERENCE VALUE?

YES

VEHICLE MODEL NFORMATION MAP UPDATE(424)

$For\ u_k: k = 1, 2, 3 \ldots$ ～492

VEHICLE MODEL INFORMATION MAP ～494

Q VALUE TABLE UPDATE

For all $u_k$? NO

YES

$k = k+1$

Q VALUE TABLE CALCULATION(426)

EP 3 835 155 B1

# FIG. 4B

476

VEHICLE — 442

| BATTERY SOC INFORMATION : $SOC_{t+1}$ | ENGINE ON/OFF INFORMATION : $E_{on,t+1}$ | FUEL CONSUMPTION INFORMATION : $W_{fuel,t}$ | VEHICLE SPEED INFORMATION : $v_{t+1}$ |

462

464

470

466

402 482

404 482

482

406 496

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110254418 A

**Non-patent literature cited in the description**

- A Heuristic Planning Reinforcement Learning-Based Energy Management for Power-Split Plug-in Hybrid Electric Vehicles. **LIU TENG et al.** IEEE TRANSACTIONS ON INDUSTRIAL INFORMATICS. IEEE SERVICE CENTER, 01 December 2019, vol. 15, 6436-6445
- Steady-State Optimization of Internal Combustion Engine for Hybrid Electric Vehicles. **WANY FENG et al.** VEHICULAR ELECTRONICS AND SAFETY, 2006. ICVES 2006. IEEE INTERNATIONAL CONFERENCE ON. IEEE, 01 December 2006, 428-433

- Energy management of hybrid electric bus based on deep reinforcement learning in continuous state and action space. **TAN HUACHUN et al.** ENERGY CONVERSION AND MANAGEMENT. ELSEVIER SCIENCE PUBLISHERS, 18 May 2019, vol. 195, 548-560